# EUROPEAN PATENT SPECIFICATION

(11) **EP 0 364 045 B1**
(45) Date of publication and mention of the grant of the patent: **09.08.1995**
(21) Application number: 89202553.7
(22) Date of filing: 09.10.1989
(51) Int. Cl.: A01K 11/00

(54) **Transponder and method for the production thereof**
Tiererkennungssender und Verfahren zu dessen Herstellung
Transpondeur et procédé pour sa production

(30) Priority: 10.10.1988 NL 8802481
(43) Date of publication of application: 18.04.1990
(73) Proprietor: TEXAS INSTRUMENTS INCORPORATED, Dallas Texas 75265 (US); Texas Instruments Holland B.V., 7600 AA Almelo (NL)
(72) Inventor: Brouwers, Arnoldus Maria, NL-7641 GB Wierden (NL)
(74) Representative: de Bruijn, Leendert C.

(56) References cited:
- EP-A- 0 132 102
- WO-A-85/04551
- WO-A-87/04900
- FR-A- 2 604 601
- GB-A- 2 188 028
- NL-A- 8 703 077
- US-A- 4 065 753
- R.W. Sillars,"Electrical Insulating Materials and their application", 1973 P.Peregrinus Ltd, London (GB), p.80,81,176-179, 192-201

## Description

The invention relates to a transponder according to the preamble of claim 1.

Such a transponder is known from US-A-4,065,753. In this specification a projectile is described to be shot from a pistol in the body of an animal for identification purposes. The projectile comprises a plastic holder material inside of which a printed circuit and an antenna are provided. The space between the electronical components and the plastic encasing is filled with an epoxy material. This epoxymaterial is relatively hard and non deformable after it has been cured. Furthermore it has been found that after extended use micro cracks occur giving a path for moisture which can attack the electronical components.

The invention aims to obviate these drawbacks.

This aim is realized with the characterizing features of claim 1. It has been found that it is not important to stop the water from reaching the electronic units to prevent corrosion, but that it is of importance to stop diffusion of ions through the plastic encapsulating material. Water in itself does not promote corrosion. It is the combination of water and ions which make an agressive solution. It has been found that polysiloxane material is an effective barrier against ions. During tests it became clear that even if an electronic component encapsulated with polysiloxane material is kept in a brine solution no ions will diffuse to the electric units. Although for most electronic units the presence of only water does not result in failure this is not true for the ferrite core surrounded by windings as the transmit/receive unit. Therefore the ferrite core is further protected by impregnation with wax.

In order to ensure better adhesion to the organism to which the transponder is implanted and to also ensure that the material to be introduced together with the transponder will remain at its surface as long as possible, the holder is provided with a certain surface roughness on the outside. Material to be introduced at the outside of the transponder together with it is e.g. Betadine having a beneficial influence during introducing of the transponder.

Since in practice the length of the transponder is less important than its diameter, a particularly advantageous arangement is obtained if the axis of the transmit/receive unit essentially coincides with the axis of the electrical element. This means that no special dimension need be selected for the electrical element, so that a standard IC housing will suffice. In order further to limit the dimensions of the transmit/receive unit designed as a ferrite core with windings, the ferrite core is designed as a cylindrical bar provided with recesses between the ends to take windings. Surprisingly, and contrary to existing expectations, it was found that no short circuiting of lines of flux occurred here, and the ferrite core was found to function in the optimum manner while its diameter decreased.

The invention also relates to producing of a transponder according to claim 5. This method is on the one hand very effective to prevent gas to be entrapped between the polysiloxane material and the electronic units and is on the other hand easily realized

The invention will be explained in greater detail below with reference to an example of an embodiment shown in the drawing, in which:
Fig. 1 shows a top view in cross section of the transponder according to the invention;
Fig. 2 shows a side view of the transponder according to the invention; and
Fig. 3 shows in cross section a detail of the ferrite core shown in the transponder in Figs. 1 and 2.

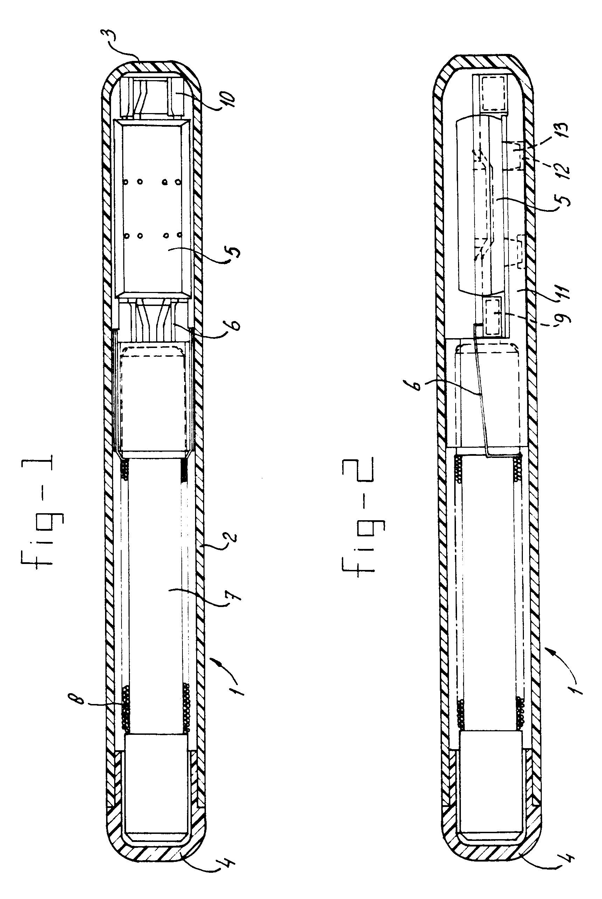

Fig. 1 shows a transponder indicated in its entirety by reference number 1. It comprises a plastic tube 2 with bottom 3, shut off at one end by a cap 4. The tube 2 contains an electronic element 5 such as a chip connected by means of connecting wires 6 to both the windings 8 of ferrite core 7 and capacitor 9 (see Fig. 2). At the other side, electronic element 5 is connected to capacitor 10, and a few other wires are free for connection to a programming device. As shown in Fig. 2, the electronic element 5 is supported by a carrier 11. For positioning, apertures 12 are provided in the carrier 11, in which legs 13 of the electronic element 5 are placed. Before the insertion of the ferrite core 7, it is impregnated with wax, together with the windings 8. This is to prevent its action from changing during operation due to moisture absorption through the plastic tube 2.

According to the invention, tube 2 is made of plastic because this ensures better adhesion to the body of the animal. In order to promote this adhesion, tube 2 and cap 4 are also provided with a certain surface roughness. The impregnation agent, wax, is not shown in the drawing. After insertion of the ferrite core and the electronic element 5 and making of all the necessary connections, before the cap 4 is placed, polysiloxane material is inserted under vacuum conditions, in order to protect the whole unit from the effects of moisture. This polysiloxane material is not shown in the drawing. Plastic tube 2 and cap 4 are preferably made by injection moulding. On the one hand, this is extremely cheap to carry out and, on the other, it is thereby ensured that a sterile product is obtained immediately after the injection moulding. Through placing the electrical element lengthwise after the ferrite core 7, it is possible to make said element fairly large, so that - as can be seen clearly from the figures - a standard chip housing can be used. Such an arrangement is important because during the implantation in an animal, as described in NL-A-8703077, the opening in the skin of the animal must be made as small as possible, following which the length of the part to be implanted is less important, all this in order to prevent as much as possible infections from injuries and the like.

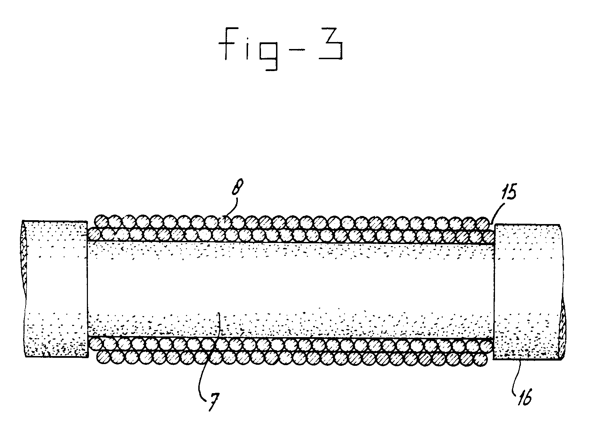

Fig. 3 shows a detail of ferrite core 7. As can be seen, this ferrite core is essentially cylindrical and provided with a recess 15. It was surprisingly found that, despite this recess 15, the functioning of the ferrite core 7 is just as good or even better than in the situation in which the windings 8 lie internally on the part with the largest external diameter indicated by 16. This is contrary to the preconceived ideas existing hitherto. Through the use of a standard chip housing, a free space is provided, in which the capacitors 9 and 10 are housed. Although the invention is described above with reference to a preferred embodiment, it must be understood that many modifications can be made to the transponder which lie within the scope of the present invention as defined by the claims.

## Claims

1. Transponder (1) to be implanted in an animal, comprising a plastic holder (2,4) containing an electrical element (5) and a transmit/receive unit (7,9) with a ferrite core (7) surrounded by windings (18), wherein the space between the element, unit respectively and the holer is filled with another plastic material, characterized in that the other plastic material comprises polysiloxane material and that the ferrite core is impregnated with wax.

2. Transponder according to claim 1 in which the external surface of the holder is roughened.

3. Transponder according to claim 1 or 2 in which the axis of the transmit/receive unit coincides with the axis of the electrical element.

4. Transponder according to claims 1,2 or 3 in which the ferrite core is a cylindrical bar provided with a recess between the ends to take the windings.

5. Method for producing of a transponder comprising:
- providing a plastic holder
- introducing an electrical element and a transmit/ receive unit with a ferrite core surrounded by windings,
- filling the space between the element, unit respectively and the holder with another plastic material,
characterized in that
the ferrite core is impregnated with wax before introduction in the holder and the other plastic material comprises polysiloxane material introduced under vacuum conditions.

## Patentansprüche

1. Transponder (1) zur Implantation in ein Tier, enthaltend einen Plastikhalter (2,4), der ein elektrisches Element (5) und eine Sende- und Empfangseinheit (7,9) mit einem von Windungen umgebenen Ferritkern enthält, wobei der Raum zwischen dem Element bzw. der Einheit und dem Halter mit einem weiteren Plastikmaterial ausgefüllt ist, dadurch gekennzeichnet, daß das weitere Plastikmaterial ein Polysiloxan-Material enthält und daß der Ferritkern mit Wachs imprägniert ist.

2. Transponder nach Anspruch 1, bei dem die Außenfläche des Halters aufgerauht ist.

3. Transponder nach Anspruch 1 oder 2, bei dem die Achse der Sende- und Empfangseinheit mit der Achse des elektrischen Elementes übereinstimmt.

4. Transponder nach den Ansprüchen 1, 2 oder 3, bei dem der Ferritkern eine zylindrischer Stab ist, der mit einer Aussparung zwischen den Enden zur Aufnahme von Windungen versehen ist.

5. Verfahren zur Herstellung eines Transponders, bei welchem
- ein Plastikhalter vorgesehen wird,
- ein elektrisches Element und eine Sende- und Empfangseinheit mit einem von Windungen umgebenen Ferritkern eingeführt werden,
- der Raum zwischen dem Element bzw. der Einheit und dem Halter mit einem weiteren Plastikmaterial ausgefüllt wird,
dadurch gekennzeichnet, daß
der Ferritkern vor dem Einführen in den Halter mit Wachs imprägniert wird und das weitere Plastikmaterial Polysiloxan enthält, das unter Vakuumbedingungen eingebracht wird.

## Revendications

1. Transpondeur (1) destiné à être implanté dans un animal, comprenant une gaine en matière plastique (2,4) contenant un élément électrique (5) et une unité de transmission/réception (7,9) avec un noyau en ferrite (7) entouré par des enroulements (18), l'espace entre l'élément, l'unité respectivement et la gaine est remplie avec un autre matériau plastique, caractérisé en ce que l'autre matériau plastique comporte du matériau polysiloxane et que le noyau de ferrite est imprégné avec de la cire.

2. Transpondeur selon la revendication 1, dans lequel la surface externe de l'étui est dégrossie.

3. Transpondeur selon la revendication 1 ou 2, dans lequel l'axe de l'unité de transmission/réception coïncide avec l'axe de l'élément électrique.

4. Transpondeur selon les revendications 1, 2 ou 3 dans lequel le noyau de ferrite est une barre cylindrique pourvue d'une encoche entre les extrémités pour recevoir les enroulements.

5. Procédé pour produire un transpondeur comprenant les étapes consistant à :
- fournir une gaine en plastique,
- introduire un élément électrique dans une unité de transmission/réception avec un noyau de ferrite entouré par des enroulements,
- remplir l'espace entre l'élément et l'unité respectivement, et la gaine avec un autre matériau plastique,
caractérisé en ce que
le noyau de ferrite est imprégné avec de la cire avant introduction dans la gaine et en ce que l'autre matériau plastique comporte du matériau polysiloxane introduit dans des conditions sous vide.
